# EUROPEAN PATENT SPECIFICATION

(11) **EP 1 980 575 B1**
(45) Date of publication and mention of the grant of the patent: **07.09.2011**
(21) Application number: 07702157.4
(22) Date of filing: 22.01.2007
(51) Int. Cl.: C08F 2/38, C08F 36/04, C08F 36/06, C08F 36/08

(54) **A METHOD OF GEL INHIBITION FOR THE HOMOPOLYMERIZATION OR COPOLYMERIZATION PROCESS OF CONJUGATED DIENE**
VERFAHREN ZUR GELINHIBIERUNG FÜR DIE HOMOPOLYMERISATION ODER COPOLYMERISATION VON KONJUGIERTEM DIEN
PROCÉDÉ D'INHIBITION DE GEL POUR PROCESSUS D'HOMOPOLYMERISATION OU DE COPOLYMERISATION DE DIÈNE CONJUGUÉ

(30) Priority: 26.01.2006 CN 200610002311
(43) Date of publication of application: 15.10.2008
(73) Proprietor: China Petroleum & Chemical Corporation, Beijing 100029 (CN)
(72) Inventor: LIANG, Aimin, Beijing 102500 (CN); WANG, Shichao, Beijing 102500 (CN); LI, Chuanqing, Beijing 102500 (CN); LI, Wei, Beijing 102500 (CN); LIU, Huiling, Beijing 102500 (CN); SUN, Wenjuan, Beijing 102500 (CN); ZHOU, Weipin, Beijing 102500 (CN); YU, Guozhu, Beijing 102500 (CN); LUAN, Guixi, Beijing 102500 (CN); YAN, Bing, Beijing 102500 (CN); ZHANG, Jie, Beijing 102500 (CN); ZHAO, Xia, Beijing 102500 (CN); WANG, Xue, Beijing 102500 (CN)
(74) Representative: Weiss, Wolfgang
(86) International application number: PCT/CN2007/000226
(87) International publication number: WO 2007/087741

(56) References cited:
- EP-A1- 0 936 232
- GB-A- 1 163 829
- GB-A- 1 197 382
- JP-A- 59 018 709
- US-A- 4 136 244
- US-A- 4 239 870
- US-A- 4 311 803

## Description

### Cross reference to related application

The present application claims the priority of the patent application CH101007855 field with the Chinese Patent Office on Jan. 26, 2066.

### Technical field

The present invention relates to gel-inhibiting method for polymerization process of conjugated dienes, and in particular to gel-inhibiting method for lithium(Li)-based anionic solution polymerization process of homopolymerization and copolymerization of conjugated dienes.

### Background art

At present, there are two processes for homopolymerization and copolymerization of conjugated dienes, i.e., batch polymerization process and continuous polymerization process. As compared with batch polymerization process, continuous polymerization process exhibits many advantages, e.g., uniform structure of polymer obtained, increased production efficiency, easily operated and adjusted process. However, one of main problems to be solved is inhibiting the formation of gels in reactors. The formation of gels is always a problem that baffles anionic homopolymerization and copolymerization of conjugated dienes, in particular in continuous polymerization process. Due to backmixing of material in the reactor and depositing of a part of swollen macromolecules on the walls of reactor, agitator and heat transfer device, some "active" macromolecules remain in the reactor for a long period of time. These active macromolecules in permanent contact with the monomers as continuously added then continue to increase in molecular chain, to thereby form insoluble super-macromolecules. This type of gel ultimately fills up the whole reactor, and leads to the early stopping of periodical running of the reactor due to complete clogging of the reactor, which is called as "polymerization intoxication". The cleaning of the gel concerns the issues of restart-up, adjusting and normal running again. Thus, the formation of gels seriously influences the uniformity of polymer, the product quality and the production efficiency, thereby retarding the progression of continuous process.

US4,311,803 disclosed a continuous polymerization process by using a stirred plug-flow tube reactor. The reactor was divided into two zones: (1) a stirred zone for polymerization, wherein a relatively higher conversion was maintained; and (2) a plug-flow zone for polymerization completion or coupling reaction. Moreover, this patent also mentioned the use of a chain transfer agent 1,2-butadiene as a gel inhibitor. The chain transfer agent 1,2-butadiene (1,2-Bd) used in this process is of high purity, and is thus produced in high cost and with complicated process, which may not be used for large-scale industrial production.

US4,091,198 disclosed a process for inhibiting gel in the continuous solution copolymerization of a conjugated diene with a monovinyl aromatic compound, wherein silicon halide was used as a gel inhibitor, which needed to be used in coordination with tert-amyl potassium. Silicon halide is a widely used coupling agent, thus its gel-inhibiting mechanism actually is coupling at the earlier stage of reaction to inactivate "active" macromolecules remained in the reactor, to thereby take the action of inhibiting gel. This gel-inhibiting method is only suited for the preparation of coupled-type copolymer, which limits the application range of the gel-inhibiting system.

US4,136,244 disclosed a process for solution polymerization of styrene-butadiene rubber by using a weak chain transfer agent such as toluene and chlorobenzene as a gel inhibitor, wherein a continuous polymerization process is adopted with cyclic ether (THF) as a structure regulator. The use of this gel inhibitor is concerned with the issue of recovery during post-treatment, which greatly increases the production cost.

### Disclosures of the invention

As seen from the above disclosures in the prior art, although 1,2-butadiene was put forward as an effective inhibitor for the formation of gels in Li-based solution polymerization, the preparation process of 1,2-butadiene was complicated and of low yield and high cost. The present inventor has made extensive and intensive researches mainly in the fields of polybutadiene rubber and styrene-butadiene rubber, for trying to develop a new type of cheap and easily available gel inhibitor. The results unexpectedly showed that a hydrocarbon mixture containing, based on its total weight, 5-27% by weight of 1,2-butadiene could just serve as a new type of cheap gel inhibitor, saving the use of 1,2-butadiene in high purity as taught in the prior art as gel inhibiter. More importantly, from the stand of economy and availability, the gel inhibitor is preferably selected from the group consisting of a C4 raffinate, a hydrogenated product of said raffinate, a hydrocarbon mixture having identical composition with said raffinate or hydrogenated product thereof, and any combinations thereof. The new type of cheap gel inhibitor can effectively inhibit the formation of gels, while producing no adverse influence on the polymer product obtained. The present invention is fulfilled just based on this discovery.

In one aspect, the present invention provides a new type of cheap and easily available gel inhibitor. This gel inhibitor not only can effectively inhibit the formation of gels in homopolymerization and copolymerization process of conjugated dienes, but also is featured with easily available raw materials and low price.

In another aspect, the present invention provides a gel-inhibiting method for Li-based anionic solution polymerization process for conjugated diene homopolymer and copolymer rubbers. This method is effective for inhibiting the formation of gels during the production of conjugated diene homopolymer and copolymer rubbers either by batch polymerization process or by continuous polymerization process.

The steam pyrolysis or catalytic cracking of petroleum hydrocarbon could by-product mixed C4 fraction in a large amount. The mixed C4 fraction after extracting 1,3-butadiene therefrom is called as "C4 raffinate" for short.

Specifically, the gel-inhibiting method for conjugated diene polymerization process according to the invention is characterized in that: a hydrocarbon mixture containing, based on its total weight, 5-27% by weight of 1,2-butadiene serves as a gel inhibitor in the conjugated diene polymerization process. The present inventors have discovered: when 1,2-butadiene is present in the gel inhibitor at an amount of less than 5% by weight, it can hardly exert an effective gel-inhibiting effect in the polymerization process of conjugated dienes; when 1,2-butadiene is present in the gel inhibitor at an amount of more than 27% by weight, it not only increases the cost of the gel inhibitor, but also results in that the polymerization process of conjugated dienes can hardly proceed in a stable manner.

The C4 raffinates and hydrogenated products thereof as gel inhibitor according to the invention generally comprise, based on their respective total weight, the following main components:

| Components | Amount, weight% |
|---|---|
| cis-, trans-2-butene | 65 ∼ 85 |
| n-, iso-butene | 1 ∼ S |
| C3-C5 alkanes | 2 ∼ 10 |
| 1,3-butadiene | 5 ∼ 10 |
| 1,2-butadiene | 5 ∼ 27 |
| C3-C5 alkynes | 0 ∼ 2, and |
| C3 and C5 olefins | 0 ∼ 2. |

Due to the differences of steam pyrolysis or catalytic cracking processes of petroleum hydrocarbon in terms of raw materials, pyrolysis or cracking degree and separation degree, the amounts of various hydrocarbon components in the C4 raffinates are somewhat different. However, any C4 raffinate containing, based on its total weight, not less than 5% by weight of 1,2-butadiene is usable, and the preferred are those C4 raffinates that contain from 5% to 25% by weight of 1,2-butadiene, and hydrogenated products thereof.

The preferable C4 raffinates are C4 streams enriched with 1,2-butadiene and obtained in a second rectification column of an extraction equipment for 1,3-butadiene. A typical C4 raffinate mainly comprises:

| Components | Amounts (weight%) |
|---|---|
| Propene | 0.016 |
| n-, iso-butene | 0.004 |
| trans-2-butene | 1.32 |
| cis-2-butene | 72.85 |
| pentane | 2.24 |
| 1,3-butadine | 9.22 |
| allylene | 0.03 |
| 1,2-butadiene | 13.33, and |
| vinyl acetylene | 0.99. |

In order to reduce the adverse influence of alkynes in the C4 raffinates on the activity of lithium-based initiator, the C4 raffinates are preferably subjected to hydrogenation treatment. Considering from economic and practical standpoint, the hydrogenated products preferably contain, based on their respective total weight, less than 0.1% by weight of alkynes. The catalysts used for the hydrogenation of alkynes are various kinds of alkynes-hydrogenation catalysts well known in the art, for example, palladium-containing bimetallic catalysts prepared by impregnation process. See, for example, CN85106117A; CN1242410A; CN1143841C; and US4587369 for the hydrogenation catalysts and the process for preparing them.

Due to the differences of steam pyrolysis or catalytic cracking processes of petroleum hydrocarbon in terms of raw materials, pyrolysis or cracking degree, separation degree, the hydrogenation catalyst and the hydrogenation process conditions, the amounts of various hydrocarbon components in the hydrogenated products of the C4 raffinates are somewhat different. The preferable hydrogenated products of the C4 raffinates are those containing, based on their respective total weight, less than 0.1% by weight of alkynes. A typical hydrogenated product of the C4 raffinate mainly comprises:

| Components | Amounts (weight%) |
|---|---|
| propane | 0.07 |
| n-butane | 3.34 |
| n-, iso-butene | 2.58 |
| trans-2-butene | 1.83 |
| cis-2-butene | 74.53 |
| pentane | 5.48 |
| 1,3-butadiene | 3.69 |
| allylene | 0.04 |
| 1,2-butadiene | 8.11 |
| ethyl acetylene | 0.011 |
| vinyl acetylene | 0.022, and |
| C3 and C5 olefins | 0.297. |

There is no special requirement for adding manner of the gel inhibitor in the present invention. The gel inhibitor may be added in the polymerization process of conjugated dienes in a conventional manner for adding a gel inhibitor. For example, it may be added together with the relevant polymerization raw materials to the reactor before the polymerization is initiated.

In an embodiment of the invention, the conjugated diene polymerization process is Li-based anionic solution polymerization, comprising the steps of: in an inert atmosphere, adding an organic lithium as an initiator, a Lewis base as an additive, said gel inhibitor and a reaction monomer, and then polymerizing the conjugated diene in a solvent.

The conjugated diene polymerization is homopolymerization of a conjugated diene or copolymerization of a conjugated diene with a monovinyl aromatic compound.

Moreover, the conjugated diene polymerization process is a batch polymerization process or a continuous polymerization process, preferably a continuous polymerization process. The continuous polymerization process may be carried out in kettle reactors connected in series or a tower reactor.

There is no special requirement for the adding amount of the gel inhibitor, only if it does not produce obvious adverse influence on the polymerization. Preferably, the adding amount of the gel inhibitor is 0.10-0.50 g/100 g solvent in homopolymerization, and 0.02-0.15 g/100 g solvent in copolymerization. More preferably, the adding amount of the gel inhibitor is 0.20-0.35 g/100 g solvent in homopolymerization, and 0.03-0.12 g/100 g solvent in copolymerization.

The solvent useful in the solution polymerization may be any solvent suitable for use in the Li-based anionic polymerization process of conjugated dienes. The preferred is a mixture of cyclohexane and n-hexane in a weight ratio of preferably 80:20 to 90:10.

The conjugated dienes useful in the invention refer to any diene monomer having in its molecule a conjugated double bond, for example, C₄-C₁₂ conjugated diene monomers, preferably C₄-C₈ conjugated diene monomers. Examples thereof include 1,3-butadiene, isoprene, 1,3-pentadiene, 1,3-hexadiene, substituted 1,3-pentadiene or substituted 1,3-butadiene, such as 2,3-dimethyl-1,3-butadiene and 1-phenyl-1,3-butadiene. The conjugated diene monomers may be used alone or in admixture. The most preferred one is 1,3-butadiene. The amount of the conjugated dienes is, in homopolymerization, preferably 2-70 g/100 ml solvent, more preferably 5-50 g/ 100 ml solvent, and most preferably 10-25 g/100 ml solvent; and in copolymerization, preferably 1-60 g/ 100 ml solvent, more preferably 3-30 g/100 ml solvent, and most preferably 6-15 g/100 ml solvent.

The monovinyl aromatic compounds useful in the invention refer to the aromatic compounds having on their aromatic ring one vinyl substituent, for example, C₈-C₂₀ monovinyl aromatic compounds, preferably C₈-C₁₂ monovinyl aromatic compounds. Examples thereof include styrene, styrene substituted with methyl, styrene substituted with butyl and their combinations, such as m-methylstyrene, p-methylstyrene or p-tert-butylstyrene, or styrene derivative having substituent on vinyl group, such as alpha-methylstyrene. The monovinyl aromatic compounds may be used alone or in admixture. Considering from the stand of easy availability, styrene and p-methylstyrene are preferred, and styrene is the most preferred. The amount thereof is 0.5-20 g/100 ml solvent, preferably 1-15 g/100 ml solvent, and most preferably 2-5 g/100 ml solvent.

The additive used in the polymerization process could be a Lewis base. Various kinds of Lewis base type compounds are applicable to the present invention. Most preferably, ether compounds or tertiary amine compounds are used as polar additive and structure regulator, for example, cyclic ether compounds, such as tetrahydrofuran, tetrahydropyrane or 1,4-dioxane; aliphatic monoether compounds, such as diethyl ether or dibutyl ether; aliphatic polyether compounds, such as ethylene glycol dimethyl ether, ethylene glycol diethyl ether, ethylene glycol dibutyl ether, diglyme, diethylene glycol diethyl ether or diethylene glycol dibutyl ether; aromatic ether compounds, such as diphenylether, anisole or the similar ethers; and tertiary amine compounds, such as triethylamine, tripropylamine, tributylamine or other tertiary amine compounds, e.g., N,N,N',N'-tetramethylethylenediamine, N,N-diethylaniline, pyridine or quinoline. The additive is used preferably in such an amount that the weight ratio of said additive to the organic lithium initiator is 45:1-5:1, preferably 35:1-10:1.

The organic lithium initiator used in the polymerization process includes those as commonly used in the field of anionic polymerization. Organic monolithium compounds are preferred, for instance, those expressed by the formula RLi, wherein R is a linear or branched C2-C6 alkyl, cyclohexyl or a C6-C10 aryl. Examples of the organic lithium initiator include ethyl lithium, propyl lithium, isopropyl lithium, n-butyl lithium, sec-butyl lithium, amyl lithium, hexyl lithium, cyclohexyl lithium, phenyl lithium, methylphenyl lithium, naphthyl lithium, with n-butyl lithium and sec-butyl lithium being preferred. The amount of the initiator in the polymerization depends on the size of the molecular weight designed. Generally, the amount of the initiator used is 0.3-2.5 mmol per 100 g of the monomer.

The inert gas used herein includes those commonly used in the art, such as nitrogen, argon or helium.

The coupling agent useful in the invention includes polyvinyl compounds, halides, ethers, aldehydes, ketones, esthers, such as divinylbenzene, tetravinylsilane, tetrachloromethane, silicon tetrachloride, tin tetrachloride and dimethyl terephthalate. The preferred coupling agents include divinylbenzene, silicon tetrachloride and tin tetrachloride. The coupling agent is used preferably in such an amount that the molar ratio of said coupling agent to the organic lithium initiator is 0.1-2.

In the present process for preparing a copolymer rubber of conjugated diene/monovinyl aromatic compound, suitable terminating agent could be water or alcohols, such as methanol, ethanol, isopropanol, and most preferably isopropanol. The terminating agent shall be used in such an amount that the molar ratio of said terminating agent to the organic lithium initiator is 0.1-1.

The antioxidant useful in the invention could be commonly used phenols or amines, preferably 2,6-di-tert-butyl p-cresol (abbreviated as antioxidant 264), tert-butyl pyrocatechol, 2,2'-methylene-bis(4-methyl-6-tert-butyl phenol) (abbreviated as antioxidant 2246). The amount of the antioxidant used is generally 0.5-2% by weight, based on the polymer.

The polymerization temperature used herein is generally 0-150°C, preferably 20-110°C, and most preferably 30-90°C.

The polymerization pressure used herein is generally 0.1-0.8 MPa, preferably 0.1-0.4 MPa, and most preferably 0.1-0.25 MPa. The pressure mentioned in the invention is gauge pressure.

The gel-inhibiting method according to the invention has no adverse influence on the polymer product prepared, whereby a rubber product having a number-average molecular weight of 50,000-600,000, and a molecular weight distribution index of 1.3-2.5 can be obtained.

The Li-based anionic solution polymerization process of conjugated dienes is well known in the art. See, for example, the US patent Nos. 4,311,803 and 4,091,198. With regard to the operation parameters and steps of the polymerization process not mentioned above, one may make reference to the conventional Li-based anionic solution polymerization process of conjugated dienes.

By using the novel gel inhibitor of the present invention, the formation of gels can be effectively inhibited. In addition, the present gel inhibitor is featured with easily available raw materials and low cost, which is particularly suitable for use in large-scale industrial production. The present gel inhibitor and gel-inhibiting method are particularly suitable for use in continuous Li-based anionic solution polymerization process of homopolymerization and copolymerization of conjugated dienes.

Unless identified otherwise, the percentages and ratios used herein are all on the basis of weight.

A

### Examples

The following examples and comparative examples further demonstrate the present inventions in details, which however are not interpreted as limiting the present inventions.

In the examples, the molecular weight and molecular weight distribution of polymers are determined by using gel permeation chromatograph (LC-10Atvp series, Shimadzu Co. Japan, determined at room temperature, with THF as a mobile phase).

In the examples, the gel content is determined by using a dissolving-weighing-filtering method, the method comprising: exactly weighing 10 g of a dried rubber sample; completely dissolving it with toluene to obtain a solution having a concentration of 5 wt%; filtering under vacuum the solution with a 360-mesh stainless steel gauze; followed by drying and weighing to determine the gel content of the sample.

### Example 1

The test was carried out in a 10 L polymerization kettle by using batch polymerization process. Under the protection of a highly pure N₂, 4810 g of a mixed solvent (a mixture of cyclohexane and n-hexane in a weight ratio of 88:12) and 18 g of THF were added to the polymerization kettle in sequence. After replacing oxygen in the polymerization system with a highly pure N₂, 732 g of 1,3-butadiene, 12.40 g of gel inhibitor #1 as described below in detail, and 0.73 g of n-butyl lithium were added to carry out the polymerization. The polymerization was initialized at a temperature of 60°C, and the reaction pressure was 0.1-0.3 MPa. After the polymerization temperature attained 70°C, 0.32 g of n-butyl lithium was added additionally. When the conversion reached 100%, 0.5 g of tin tetrachloride was added to the polymerization kettle for carrying out coupling reaction. After the coupling reaction was completed, 0.5 g of isopropanol as terminating agent and 10 g of 2,6-di-tert-butyl p-cresol as antioxidant were added to terminate the reaction. The rubber solution was coagulated with water steam; and then dried with double machines (i.e., a dehydration-extrusion desiccation machine and an expansion-extrusion desiccation machine) to obtain a polybutadiene rubber product. The gel content of the product is shown in Table 1.

### Example 2

The test was carried out in a 10 L polymerization kettle by using batch polymerization process. Under the protection of a highly pure N₂, 4810 g of a mixed solvent (a mixture of cyclohexane and n-hexane in a weight ratio of 88:12) and 18 g of THF were added to the polymerization kettle in sequence. After replacing oxygen in the polymerization system with a highly pure N₂, 732 g of 1,3-butadiene, 7.56 g of gel inhibitor #2 as described below in detail, and 0.73 g of n-butyl lithium were added to carry out the polymerization. The polymerization was initialized at a temperature of 60°C, and the reaction pressure was 0.1-0.3 MPa. After the polymerization temperature attained 70°C, 0.32 g of n-butyl lithium was added additionally. When the conversion reached 100%, 0.5 g of tin tetrachloride was added to the polymerization kettle for carrying out coupling reaction. After the coupling reaction was completed, 0.5 g of isopropanol as terminating agent and 10 g of 2,6-di-tert-butyl p-cresol as antioxidant were added to terminate the reaction. The rubber solution was coagulated with water steam, and then dried with double machines (i.e., a dehydration-extrusion desiccation machine and an expansion-extrusion desiccation machine) to obtain a polybutadiene rubber product. The molecular weight, molecular weight distribution and gel content of the product are shown in Table 1.

### Example 3

The test was carried out in a stainless steel experimental plant consisting of three 5L-kettles connected in series by using continuous polymerization process. The whole set of device was under the protection of a highly pure N₂. The various materials were separately formulated, and continuously fed by means of delivery pumps, and entered the kettles after preheating and premixing. The various materials fed by the delivery pumps were of the amounts as follows: 3572 g/hr of a mixed solvent (a mixture of cyclohexane and n-hexane in a weight ratio of 88:12), 504.55 g/hr of 1,3-butadiene, 6.73 g/hr of THF as additive, 10.06 g/hr of the gel inhibitor #1, and 0.237 g/hr of n-butyl lithium. n-Butyl lithium was added together with the mixed materials mentioned above to the first kettle. The reaction pressure was 0.1-0.3 MPa, the polymerization temperature was 85-95°C, the total residence time in the three kettles was 150 min, and the final conversion reached 100%. The temperature of the whole set of the reaction system was controlled with jacket water. To the rubber solution flowed out of the third kettle, 1 g/hr of water as terminating agent and 4 g/hr of 2,6-di-tert-butyl p-cresol as antioxidant were continuously added to terminate the reaction. The rubber solution was coagulated with water steam, and then dried with double machines (i.e., a dehydration-extrusion desiccation machine and an expansion-extrusion desiccation machine) to obtain a polybutadiene rubber product. The test was stably carried out for 200 hr. The molecular weight, molecular weight distribution and gel content of the product are shown in Table 1.

### Example 4

The test was carried out in a 10 L polymerization kettle by using batch polymerization process. Under the protection of a highly pure N₂, 4810 g of a mixed solvent (a mixture of cyclohexane and n-hexane in a weight ratio of 88:12), 184 g of styrene, and 18 g of THF as additive were added to the polymerization kettle in sequence. After replacing oxygen in the polymerization system with a highly pure N₂, 548 g of 1,3-butadiene, 3.4 g of the gel inhibitor #1, and 0.73 g of n-butyl lithium were added to carry out copolymerization. The polymerization was initialized at a temperature of 60°C, and the reaction pressure was 0.1-0.3 MPa. After the polymerization temperature attained 70°C, 0.32 g of n-butyl lithium was added additionally. When the conversion reached 100%, 0.5 g of tin tetrachloride was added to the polymerization kettle for carrying out coupling reaction. After the coupling reaction was completed, 0.5 g of isopropanol as terminating agent and 10 g of 2,6-di-tert-butyl p-cresol as antioxidant were added to terminate the reaction. The rubber solution was coagulated with water steam, and then dried with double machines (i.e., a dehydration-extrusion desiccation machine and an expansion-extrusion desiccation machine) to obtain a S-SBR (solution styrene butadiene rubber) product. The molecular weight, molecular weight distribution and gel content of the product are shown in Table 1.

### Example 5

The test was carried out in a stainless steel experimental plant consisting of three 5L-kettles connected in series by using continuous polymerization process. The whole set of device was under the protection of a highly pure N₂. The various materials were separately formulated, and continuously fed by means of delivery pumps, and entered the kettles after preheating and premixing. The various materials fed by the delivery pumps were of the amounts as follows: 3572 g/hr of a mixed solvent (a mixture of cyclohexane and n-hexane in a weight ratio of 88:12), 141.27 g/hr of styrene, 363.28 g/hr of 1,3-butadiene, 6.73 g/hr of THF as additive, 2.52 g/hr of the gel inhibitor #1, and 0.237 g/hr of n-butyl lithium. n-Butyl lithium was added together with the mixed materials mentioned above to the first kettle. The reaction pressure was 0.1-0.3 MPa, the polymerization temperature was 85-95°C, the total residence time in the three kettles was 150 min, and the final conversion reached 100%. The temperature of the whole set of the reaction system was controlled with jacket water. To the rubber solution flowed out of the third kettle, 1 g/hr of water as terminating agent and 4 g/hr of 2,6-di-tert-butyl p-cresol as antioxidant were continuously added to terminate the reaction. The rubber solution was coagulated with water steam, and then dried with double machines (i.e., a dehydration-extrusion desiccation machine and an expansion-extrusion desiccation machine) to obtain a S-SBR product. The test was stably carried out for 200 hr. The molecular weight, molecular weight distribution and gel content of the product are shown in Table 1.

### Example 6

The test was carried out in a stainless steel pilot plant consisting of three 200L-kettles connected in series by using continuous polymerization process. The whole set of device was under the protection of a highly pure N₂. The various materials were separately formulated, and continuously fed by means of delivery pumps, and entered the kettles after preheating and premixing. The various materials fed by the delivery pumps were of the amounts as follows: 283 kg/hr of a mixed solvent (a mixture of cyclohexane and n-hexane in a weight ratio of 88:12), 10.53 kg/hr of styrene, 28.40 kg/hr of 1,3-butadiene, 482.99 g/hr of THF as additive, 318.06 g/hr of the gel inhibitor #1, 62.29 g/hr of n-butyl lithium, and 63.50 g/hr of tin tetrachloride as coupling agent. n-Butyl lithium was added together with the mixed materials mentioned above to the first kettle, and tin tetrachloride was added to the third kettle. Copolymerization was carried in the foregoing two kettles, and coupling reaction.was carried out in the third kettle. The reaction pressure was 0.1-0.3 MPa, the polymerization temperature was 85-95°C, the total residence time in the three kettles was 60 min, and the final conversion reached 100%. The temperature of the whole set of the reaction system was controlled with jacket water. To the rubber solution flowed out of the third kettle, 7.2 g/hr of water as terminating agent and 0.32 kg/hr of 2,6-di-tert-butyl p-cresol as antioxidant were continuously added to terminate the reaction. The rubber solution was coagulated with water steam, and then dried with double machines (i.e., a dehydration-extrusion desiccation machine and an expansion-extrusion desiccation machine) to obtain a S-SBR product. The test was stably carried out for 256 hr. The molecular weight, molecular weight distribution and gel content of the product are shown in Table 1.

### Example 7

The test was carried out in a pilot plant with a 330 L stainless steel tower reactor by using continuous polymerization process. The tower reactor was in five layers. The whole set of device was under the protection of a highly pure N₂. The various materials were separately formulated, and continuously fed by means of delivery pumps, and entered the reactor after preheating and premixing. The various materials fed by the delivery pumps were of the amounts as follows: 119 kg/hr of a mixed solvent (a mixture of cyclohexane and n-hexane in a weight ratio of 88:12), 4.97 kg/hr of styrene, 14.49 kg/hr of 1,3-butadiene, 207.69 g/hr of THF as additive, 83.28 g/hr of the gel inhibitor #2, 31.14 g/hr of n-butyl lithium, and 31.74 g/hr of tin tetrachloride as coupling agent. n-Butyl lithium was added together with the mixed materials mentioned above from the top of the tower, and tin tetrachloride was added in the fourth layer of the tower. Copolymerization was carried in the foregoing three layers, and coupling reaction was carried out in the fourth and fifth layers. The reaction pressure was 0.1-0.3 MPa, the polymerization temperature was 85-95°C, the reaction residence time was 60 min, and the final conversion reached 100%. The temperature of the whole set of the reaction system was controlled with jacket water. The rubber solution flowed out of the bottom of the tower and entered a rubber solution buffer tank. To the rubber solution buffer tank, 3.6 g/hr of water as terminating agent and 0.16 kg/hr of 2,6-di-tert-butyl p-cresol as antioxidant were continuously added to terminate the reaction. The rubber solution was coagulated with water steam, and then dried with double machines (i.e., a dehydration-extrusion desiccation machine and an expansion-extrusion desiccation machine) to obtain a S-SBR product. The test was stably carried out for 256 hr. The molecular weight, molecular weight distribution and gel content of the product are shown in Table 1.

### Comparative example 1

The test was carried out in a 10 L polymerization kettle by using batch polymerization process. Under the protection of a highly pure N₂, 4810 g of a mixed solvent (a mixture of cyclohexane and n-hexane in a weight ratio of 88:12), 184 g of styrene and 18 g of THF as additive were added to the polymerization kettle in sequence. After replacing oxygen in the polymerization system with a highly pure N₂, 548 g of 1,3-butadiene and 0.73 g of n-butyl lithium were added to carry out copolymerization. The polymerization was initialized at a temperature of 60°C, and the reaction pressure was 0.1-0.3 MPa. After the polymerization, temperature attained 70°C, 0.32 g of n-butyl lithium was added additionally. When the conversion reached 100%, 0.5 g of tin tetrachloride was added to the polymerization kettle for carrying out coupling reaction. After the coupling reaction was completed, 0.5 g of isopropanol as terminating agent and 10 g of 2,6-di-tert-butyl p-cresol as antioxidant were added to terminate the reaction. The rubber solution was coagulated with water steam, and then dried with double machines (i.e., a dehydration-extrusion desiccation machine and an expansion-extrusion desiccation machine) to obtain a S-SBR product. The molecular weight, molecular weight distribution and gel content of the product are shown in Table 1.

### Comparative example 2

The test was carried out in a stainless steel experimental plant consisting of three 5L-kettles connected in series by using continuous polymerization process. The whole set of device was under the protection of a highly pure N₂. The various materials were separately formulated, and continuously fed by means of delivery pumps, and entered the kettles after preheating and premixing. The various materials fed by the delivery pumps were of the amounts as follows: 3572 g/hr of a mixed solvent (a mixture of cyclohexane and n-hexane in a weight ratio of 88:12), 504.55 g/hr of 1,3-butadiene, 6.73 g/hr of THF as additive, and 0.237 g/hr of n-butyl lithium. n-Butyl lithium was added together with the mixed materials mentioned above to the first kettle. The reaction pressure was 0.1-0.3 MPa, the polymerization temperature was 85-95°C, the total residence time in the three kettles was 150 min, and the final conversion reached 100%. The temperature of the whole set of the reaction system was controlled with jacket water. To the rubber solution flowed out of the third kettle, 1 g/hr of water as terminating agent and 4 g/hr of 2,6-di-tert-butyl p-cresol as antioxidant were continuously added to terminate the reaction. The rubber solution was coagulated with water steam, and then dried with double machines (i.e., a dehydration-extrusion desiccation machine and an expansion-extrusion desiccation machine) to obtain a polybutadiene rubber product. The test was stably carried out for 200 hr. The molecular weight, molecular weight distribution and gel content of the product are shown in Table 1.

### Comparative example 3

The test was carried out in a stainless steel experimental plant consisting of three 5L-kettles connected in series by using continuous polymerization process. The whole set of device was under the protection of a highly pure N₂. The various materials were separately formulated, and continuously fed by means of delivery pumps, and entered the kettles after preheating and premixing. The various materials fed by the delivery pumps were of the amounts as follows: 3572 g/hr of a mixed solvent (a mixture of cyclohexane and n-hexane in a weight ratio of 8.8:12), 141.27 g/hr of styrene, 363.28 g/hr of 1,3-butadiene, 6.73 g/hr of THF as additive, and 0.237 g/hr of n-butyl lithium. n-Butyl lithium was added together with the mixed materials mentioned above to the first kettle. The reaction pressure was 0.1-0.3 MPa, the polymerization temperature was 85-95°C, the total residence time in the three kettles was 150 min, and the final conversion reached 100%. The temperature of the whole set of the reaction system was controlled with jacket water. To the rubber solution flowed out of the third kettle, 1 g/hr of water as terminating agent and 4 g/hr of 2,6-di-tert-butyl p-cresol as antioxidant were continuously added to terminate the reaction. The rubber solution was coagulated with water steam, and then dried with double machines (i.e., a dehydration-extrusion desiccation machine and an expansion-extrusion desiccation machine) to obtain a S-SBR product. The test was stably carried out for 200 hr. The molecular weight, molecular weight distribution and gel content of the product are shown in. Table 1.

**Table 1**

| No. | Mn(x 10⁴) | Mw/Mn | Gel(ppm) | Gel morphology |
|---|---|---|---|---|
| Ex. 1 | 12.0 | 1.50 | 25 | Dispersed microparticles |
| Ex. 2 | 12.5 | 1.60 | 28 | Dispersed microparticles |
| Ex. 3 | 13.6 | 1.85 | 35 | Dispersed microparticles |
| Ex. 4 | 12.0 | 1.52 | 30 | Dispersed microparticles |
| Ex. 5 | 13.0 | 1.80 | 20 | Dispersed microparticles |
| Ex.6 | 12.9 | 1.90 | 33 | Dispersed microparticles |
| Ex. 7 | 13.8 | 1.99 | 40 | Dispersed microparticles |
| Comp. Ex. 1 | 12.2 | 1.55 | 8500 | Bulk gel |
| Comp. Ex. 2 | 13.5 | 1.88 | 21000 | Bulk gel |
| Comp. Ex. 3 | 13.6 | 1.92 | 17000 | Bulk gel |

| | | | | |
|---|---|---|---|---|
| Notes: Mn (x 10⁴) is number-average molecular weight; Mw/Mn is molecular weight distribution index; Gel(ppm) is gel content by weight in the test sample. The gel morphology was obtained by visual observation. | | | | |

The gel inhibitor #1 (a hydrogenated product of C4 raffinate) used in the above examples comprises:

| Components | Amounts (weight%) |
|---|---|
| Propane | 0.07 |
| n-butane | 3.34 |
| n-, iso-butene | 2.58 |
| trans-2-butene | 1.83 |
| cis-2-butene | 74.53 |
| pentane | 5.48 |
| 1,3-butadiene | 3.69 |
| allylene | 0.04 |
| 1,2-butadiene | .8.11 |
| ethyl acetylene | 0.011 |
| vinyl acetylene | 0.022, and |
| C3 and C5 olefins | 0.297. |

The gel inhibitor #2 (a C4 raffinate) used in the above examples comprises:

| Components . | Amounts (weight%) |
|---|---|
| propene | 0.016 |
| n-, iso-butene | 0.004 |
| trans-2-butene | 1.32 |
| cis-2-butene | 72.85 |
| pentane | 2.24 |
| 1,3-butadiene | 9.22 |
| allylene | 0.03 |
| 1,2-butadiene | 13.33, and |
| vinyl acetylene | 0.99. |

## Claims

1. A gel-inhibiting method for conjugated diene polymerization process, **characterized in that**: a gel inhibitor is used in the conjugated diene polymerization process, said gel inhibitor being a hydrocarbon mixture containing, based on its total weight, 5-27% by weight of 1,2-butadiene.

2. The method according to claim 1, wherein the gel inhibitor is selected from the group consisting of C4 raffinates, hydrogenated products of C4 raffinates, hydrocarbon mixtures having identical composition to C4 raffinates and hydrogenated products of C4 raffinates, and combinations thereof.

3. The method according to claim 2, wherein the gel inhibitor contains, based on its total weight, from 5% to 25% by weight of 1,2-butadiene; and wherein the hydrogenated products contain, based on their respective total weight, less than 0.1% by weight of alkynes.

4. The method according to claim 1 or 2, wherein the gel inhibitor, based on its total weight, comprises:
Components Amount, weight%
cis-, trans-2-butene 65∼85
n-, iso-butene 1∼5
C3-C5 alkanes 2∼10
1,3-butadiene 5∼10
1,2-butadiene 5∼27
C3-C5 alkynes 0∼2, and
C3 and C5 olefins 0∼2.

5. The method according to claim 1 or 2, wherein the conjugated diene polymerization process is Li-based anionic solution polymerization, preferably comprising the steps of: in an inert atmosphere, adding an organic lithium as an initiator, a Lewis base as an additive, said gel inhibitor and a reaction monomer, and polymerizing the conjugated diene in a solvent.

6. The method according to claim 1 or 2, wherein the conjugated diene polymerization is homopolymerization of a conjugated diene or copolymerization of a conjugated diene with a monovinyl aromatic compound.

7. The method according to claim 1 or 2, wherein the conjugated diene polymerization process is a batch polymerization process or a continuous polymerization process.

8. The method according to claim 5, wherein the adding amount of the gel inhibitor is 0.10-0.50 g/100 g solvent, and preferably 0.20-0.35 g/100 g solvent, in homopolymerization; and 0.02-0.15 g/100 g solvent, and preferably 0.03-0.12 g/100 g solvent, in copolymerization.

9. The method according to claim 5, wherein the solvent is a mixture of cyclohexane and n-hexane in a weight ratio of 80:20 to 90:10.

10. The method according to claim 5, wherein the organic lithium initiator is an organic monolithium compound expressed by the formula RLi, wherein R is a linear or branched C2-C6 alkyl, cyclohexyl or a C6-C10 aryl; preferably, the organic lithium initiator is ethyl lithium, propyl lithium, isopropyl lithium, n-butyl lithium, sec-butyl lithium, amyl lithium, hexyl lithium, cyclohexyl lithium, phenyl lithium, methylphenyl lithium, naphthyl lithium; more preferably, the organic lithium initiator is n-butyl lithium or sec-butyl lithium; the amount of the organic lithium initiator used is 0.3-2.5 mmol per 100 g of the monomer.

11. The method according to claim 5, wherein the Lewis base is selected from the group consisting of cyclic ether compounds, aliphatic monoether compounds, aliphatic polyether compounds, aromatic ether compounds, amine compounds, pyridine, quinoline, and any combinations thereof; preferably, the Lewis base is selected form the group consisting of tetrahydrofuran, tetrahydropyrane, 1,4-dioxane, diethyl ether, dibutyl ether, ethylene glycol dimethyl ether, ethylene glycol diethyl ether, ethylene glycol dibutyl ether, diglyme, diethylene glycol diethyl ether, diethylene glycol dibutyl ether, diphenylether, anisole, triethylamine, tripropylamine, tributylamine, N,N,N',N'-tetramethylethylenediamine, N,N-diethylaniline, and any combinations thereof; the Lewis base is used in such an amount that the weight ratio of said base to the organic lithium initiator is 45:1-5:1.

12. The method according to claim 5, wherein the conjugated diene is a C₄-C₁₂ conjugated diene; preferably, the conjugated diene is selected from the group consisting of 1,3-butadiene, isoprene, 1,3-pentadiene, 1,3-hexadiene, 2,3-dimethyl-1,3-butadiene, 1-phenyl-1,3-butadiene, and combinations thereof; more preferably, the conjugated diene is 1,3-butadiene; the amount of the conjugated diene is 2-70 g/100 ml solvent in homopolymerization, and 1-60 g/100 ml solvent in copolymerization.

13. The method according to claim 6, wherein the monovinyl aromatic compound is a C₈-C₂₀ monovinyl aromatic compound; preferably, the monovinyl aromatic compound is selected from the group consisting of styrene, styrene substituted with methyl, styrene substituted with butyl, and combinations thereof; more preferably, the monovinyl aromatic compound is selected from the group consisting of m-methylstyrene, p-methylstyrene, p-tert-butylstyrene, alpha-methylstyrene, and combinations thereof; the amount of the monovinyl aromatic compound is 0.5-20 g/100 ml solvent in copolymerization of the conjugated diene with the monovinyl aromatic compound.

14. The method according to claim 5, wherein the polymerization is carried out at a temperature of from 0 to 150°C and at a pressure of from 0.1 to 0.8 MPa gauge.

15. Use of a hydrocarbon mixture containing, based on its total weight, 5 to 27% by weight of 1,2-butadiene as a gel inhibitor in conjugated diene polymerization processes.

## Patentansprüche

1. Gel-inhibierendes Verfahren für einen Prozess zur Polymerisation von konjugiertem Dien, **dadurch gekennzeichnet, dass** ein Gelinhibitor in dem Prozess zur Polymerisation von konjugiertem Dien verwendet wird, wobei der Gelinhibitor eine Kohlenwasserstoffmischung ist, die 5-27 Gewichts-% 1,2-Butadien bezogen auf dessen Gesamtgewicht enthält.

2. Verfahren nach Anspruch 1, wobei der Gelinhibitor ausgewählt ist aus der Gruppe bestehend aus C4-Raffinaten, hydrierten Produkten von C4-Raffinaten, Kohlenwasserstoffmischungen mit identischen Zusammensetzungen zu C4-Raffinaten und hydrierten Produkten von C4-Raffinaten und Kombinationen davon.

3. Verfahren nach Anspruch 2, wobei der Gelinhibitor von 5 Gewichts-% bis 25 Gewichts-% 1,2-Butadien bezogen auf dessen Gesamtgewicht enthält und wobei die hydrierten Produkte weniger als 0,1 Gewichts-% Alkine bezogen auf ihr jeweiliges Gesamtgewicht enthalten.

4. Verfahren nach Anspruch 1 oder 2, wobei der Gelinhibitor bezogen auf dessen Gesamtgewicht umfasst:
Komponenten Menge, Gewichts-%
cis-, trans-2-Buten 65∼85
n-, Isobuten 1∼5
C3-C5 Alkane 2∼10
1,3-Butadien 5∼10
1,2-Butadien 5∼27

5. Verfahren nach Anspruch 1 oder 2, wobei der Prozess zur Polymerisation von konjugiertem Dien eine lithiumbasierte anionische Lösungspolymerisation ist, bevorzugt umfassend die Schritte: Zugeben eines organischen Lithiums als einen Initiator, einer Lewis Base als ein Additiv, des besagten Gelinhibitors und eines Reaktionsmonomers in einer inerten Atmosphäre und Polymerisieren des konjugierten Diens in einem Lösungsmittel.

6. Verfahren nach Anspruch 1 oder 2, wobei die Polymerisation von konjugiertem Dien eine Homopolymerisation eines konjugierten Diens oder eine Copolymerisation von einem konjugierten Dien mit einer Monovinyl-aromatischen Verbindung ist.

7. Verfahren nach Anspruch 1 oder 2, wobei das Verfahren zur Polymerisation von konjugiertem Dien ein diskontinuierlicher Polymerisationsprozess oder ein kontinuierlicher Polymerisationsprozess ist.

8. Verfahren nach Anspruch 5, wobei die Zugabemenge des Gelinhibitors 0,10-0,50 g/100 g Lösungsmittel ist und bevorzugt 0,20-0,35 g/100 g Lösungsmittel ist bei Homopolymerisation; und 0,02-0,15/100 g Lösungsmittel und bevorzugt 0,03-0,12 g/100 g Lösungsmittel bei Copolymerisation ist.

9. Verfahren nach Anspruch 5, wobei das Lösungsmittel eine Mischung aus Cyclohexan und n-Hexan in einem Gewichtsverhältnis von 80:20 bis 90:10 ist.

10. Verfahren nach Anspruch 5, wobei der organische Lithiuminitiator eine organische Monolithiumverbindung ausgedrückt durch die Formel RLi ist, wobei R ein lineares oder verzweigtes C2-C6-Alkyl, Cyclohexyl oder ein C6-C10-Aryl ist; bevorzugt ist der organische Lithiuminitiator Ethyllithium, Propyllithium, Isopropyllithium, n-Butyllithium, sec-Butyllithium, Amyllithium, Hexyllithium, Cyclohexyllithium, Phenyllithium, Methylphenyllithium, Naphthyllithium; noch bevorzugter ist der organische Lithiuminitiator n-Butyllithium oder sec-Butyllithium; die Menge des verwendeten organischen Lithiuminitiators beträgt 0,3-2,5 mmol/100 g des Monomers.

11. Verfahren nach Anspruch 5, wobei die Lewis Base ausgewählt ist aus der Gruppe bestehend aus zyklischen Etherverbindungen, alipathischen Monoetherverbindungen, alipathischen Polyetherverbindungen, aromatischen Etherverbindungen, Aminverbindungen, Pyridin, Chinolin und beliebigen Kombinationen davon; bevorzugt ist die Lewis Base ausgewählt aus der Gruppe bestehend aus Tetrahydrofuran, Tetrahydropyran, 1,4-Dioxan, Diethylether, Dibutylether, Ethylenglycoldimethylether, Ethylenglycoldiethylether, Ethylenglycoldibutylether, Diglyme, Diethylenglycoldiethylether, Diethylenglycoldibutylether, Diphenylether, Anisol, Triethylamin, Tripropylamin, Tributylamin, N,N,N',N'-Tetramethylethylendiamin, N,N-Diethylanilin und beliebige Kombinationen davon; die Lewis Base wird in solch einer Menge verwendet, dass das Gewichtsverhältnis der besagten Base zu dem organischen Lithiuminitiator 45:1 - 5:1 ist.

12. Verfahren nach Anspruch 5, wobei das konjugierte Dien ein C4-C12 konjugiertes Dien ist; bevorzugt ist das konjugierte Dien ausgewählt aus der Gruppe bestehend aus 1,3-Butadien, Isopren, 1,3-Pentadien, 1,3-Hexadien, 2,3-Dimethyl-1,3-Butadien, 1-Phenyl-1,3-Butadien und Kombinationen davon; stärker bevorzugt ist das konjugierte Dien 1,3-Butadien; die Menge an dem konjugierten Dien ist 2-70 g/100 ml Lösungsmittel bei Homopolymerisation und 1-60 g/100 ml Lösungsmittel bei Copolymerisation.

13. Verfahren nach Anspruch 6, wobei die Monovinyl-aromatische Verbindung eine C₈-C₂₀ Monovinyl-aromatische Verbindung ist; bevorzugt ist die Monovinyl-aromatische Verbindung ausgewählt aus der Gruppe bestehend aus Styrol, Styrol substituiert mit Methyl, Styrol substituiert mit Butyl und Kombinationen davon; stärker bevorzugt ist die Monovinyl-aromatische Verbindung ausgewählt aus der Gruppe bestehend aus m-Methylstyrol, p-Methylstyrol, p-tert-Butylstyrol, alpha-Methylstyrol und Kombinationen davon; die Menge an der Monovinyl-aromatischen Verbindung ist 0,5-20 g/100 ml Lösungsmittel bei Copolymerisation des konjugierten Diens mit der Monovinyl-aromatischen Verbindung.

14. Verfahren nach Anspruch 5, wobei die Polymerisation bei einer Temperatur von 0-150° C und bei einem Druck von 0,1 bis 0,8 MPa (Gauge) ausgeführt wird.

15. Verwendung einer Kohlenwasserstoffmischung enthaltend 5-27 Gewichts-% bezogen auf deren Gesamtgewicht 1,2-Butadien als einen Gelinhibitor bei Prozessen zur Polymerisation von konjugiertem Dien.

## Revendications

1. Procédé d'inhibition de gel pour un processus de polymérisation de diène conjugué, **caractérisé en ce que** : un inhibiteur de gel est utilisé dans le processus de polymérisation de diène conjugué, ledit inhibiteur de gel étant un mélange d'hydrocarbures contenant, sur la base de son poids total, 5 - 27 % en poids de 1,2-butadiène.

2. Procédé selon la revendication 1 où l'inhibiteur de gel est choisi dans le groupe consistant en les raffinats C4, les produits hydrogénés de raffinats C4, les mélanges d'hydrocarbures ayant une composition identique aux raffinats C4 et les produits hydrogénés de raffinats C4, et leurs combinaisons.

3. Procédé selon la revendication 2 où l'inhibiteur de gel contient, sur la base de son poids total, de 5 % à 25 % en poids de 1,2-butadiène ; et où les produits hydrogénés contiennent, sur la base de leur poids total respectif, moins de 0,1 % en poids d'alcynes.

4. Procédé selon la revendication 1 ou 2 où l'inhibiteur de gel, sur la base de son poids total, comprend :
| Composants | Quantité, % en poids |
|---|---|
| cis-, trans-2-butène | 65∼85 |
| n-, iso-butène | 1~5 |
| C3-C5 alcanes | 2∼10 |
| 1,3-butadiène | 5~10 |
| 1,2-butadiène | 5∼27 |
| C3-C5 alcynes | 0∼2, et |
| C3 et C5 oléfines | 0∼2. |

5. Procédé selon la revendication 1 ou 2 où le processus de polymérisation de diène conjugué est une polymérisation en solution anionique basée sur Li, de préférence comprenant les étapes de : dans une atmosphère inerte, addition d'un lithium organique comme initiateur, d'une base de Lewis comme additif, dudit inhibiteur de gel comme monomère réactionnel, et polymérisation du diène conjugué dans un solvant.

6. Procédé selon la revendication 1 ou 2 où la polymérisation de diène conjugué est une homopolymérisation d'un diène conjugué ou une copolymérisation d'un diène conjugué avec un composé monovinylaromatique.

7. Procédé selon la revendication 1 ou 2 où le processus de polymérisation de diène conjugué est un processus de polymérisation discontinu ou un processus de polymérisation continu.

8. Procédé selon la revendication 5 où la quantité ajoutée d'inhibiteur de gel est 0,10 - 0,50 g/100 g de solvant, et de préférence 0,20 - 0,35 g/100 g de solvant, dans l'homopolymérisation, et 0,02 - 0,15 g/100 g de solvant, et de préférence 0,03 - 0,12 g/100 g de solvant, dans la copolymérisation.

9. Procédé selon la revendication 5 où le solvant est un mélange de cyclohexane et de n-hexane dans un rapport en poids de 80 : 20 à 90 : 10.

10. Procédé selon la revendication 5 où l'initiateur lithium organique est un composé de monolithium organique exprimé par la formule RLi où R est un C2-C6 alkyle linéaire ou ramifié, cyclohexyle ou un C6-C10 aryle ; de préférence, l'initiateur lithium organique est l'éthyllithium, le propyllithium, l'isopropyllithium, le n-butyllithium, le sec-butyllithium, l'amyllithium, l'hexyllithium, le cyclohexyllithium, le phényllithium, le méthylphényllithium, le naphtyllithium; de préférence encore, l'initiateur lithium organique est le n-butyllithium ou le sec-butyllithium; la quantité d'initiateur lithium organique utilisée est 0,3 - 2,5 mmol pour 100 g de monomère.

11. Procédé selon la revendication 5 où la base de Lewis est choisie dans le groupe consistant en les composés éthers cycliques, les composés monoéthers aliphatiques, les composés polyéthers aliphatiques, les composés éthers aromatiques, les composés amines, la pyridine, la quinoléine, et toute combinaison de ceux-ci ; de préférence, la base de Lewis est choisie dans le groupe consistant en le tétrahydrofurane, le tétrahydropyrane, le 1,4-dioxine, le diéthyléther, le dibutyléther,le diméthyléther d'éthylèneglycol, le diéthylétherd'éthylèneglycol, le dibutylétherd'éthylèneglycol, le diglyme, le diéthylétherde diéthylèneglycol, le dibutylétherde diéthylèneglycol, le diphényltéther, l'anisole, la triéthylamine, la tripropylamine, la tributylamine, la N,N,N',N'-tétraméthyléthylènediamine, la N,N-diéthylaniline, et toute combinaison de ceux-ci ; la base de Lewis est utilisée en une quantité telle que le rapport en poids de ladite base à l'initiateur lithium organique est 45 : 1 -5:1.

12. Procédé selon la revendication 5 où le diène conjugué est un C₄-C₁₂diène conjugué ; de préférence, le diène conjugué est choisi dans le groupe consistant en 1,3-butadiène, isoprène, 1,3-pentadiène, 1,3-hexadiène, 2,3-diméthyl-1,3-butadiène, 1-phényl-1,3-butadiène, et leurs combinaisons ; de préférence encore, le diène conjugué est le 1,3-butadiène; la quantité de diène conjugué est 2 - 70 g/100 ml de solvant dans l'homopolymérisation, et 1 - 60 g/100 ml de solvant dans la copolymérisation.

13. Procédé selon la revendication 6 où le composé monovinylaromatique est un composé C₈-C₂₀ monovinylaromatique ; de préférence, le composé monovinylaromatique est choisi dans le groupe consistant en le styrène, le styrène substitué avec méthyle, le styrène substitué avec butyle, et leurs combinaisons ; de préférence encore, le composé monovinylaromatique est choisi dans le groupe consistant en le m-méthylstyrène, le p-méthylstyrène, le p-tert-butylstyrène, l'alpha-méthylstyrène et leurs combinaisons ; la quantité de composé monovinylaromatique est 0,5 - 20 g/100 ml de solvant dans la copolymérisation du diène conjugué avec le composé monovinylaromatique.

14. Procédé selon la revendication 5 où la polymérisation est conduite à une température de 0 à 150°C et à une pression de 0,1 à 0,8 MPa manométrique.

15. Utilisation d'un mélange d'hydrocarbures contenant, sur la base de son poids total, 5 à 27 % en poids de 1,2-butadiène comme inhibiteur de gel dans des processus de polymérisation de diène conjugué.
